# EUROPÄISCHE PATENTSCHRIFT

(11) **EP 1 937 970 B1**
(45) Veröffentlichungstag und Bekanntmachung des Hinweises auf die Patenterteilung: **11.01.2012**
(21) Anmeldenummer: 05816537.4
(22) Anmeldetag: 09.11.2005
(51) Int. Cl.: F04B 27/10, F04B 53/00, F16C 27/06, F16C 27/08

(54) **AXIALKOLBENMASCHINE**
AXIAL PISTON MACHINE
MACHINE A PISTONS AXIAUX

(30) Priorität: 20.11.2004 DE 102004056081
(43) Veröffentlichungstag der Anmeldung: 02.07.2008
(73) Patentinhaber: ixetic Bad Homburg GmbH, 61352 Bad Homburg (DE)
(72) Erfinder: BECKER, Uwe, 35510 Butzbach (DE)
(86) Internationale Anmeldenummer: PCT/DE2005/002022
(87) Internationale Veröffentlichungsnummer: WO 2006/053526

(56) Entgegenhaltungen:
- EP-A- 0 326 043
- EP-A- 1 281 866
- DE-A1- 1 909 958
- DE-B- 1 254 915
- DE-C- 846 010
- PATENT ABSTRACTS OF JAPAN Bd. 2000, Nr. 04, 31. August 2000 (2000-08-31) -& JP 2000 018156 A (TOYOTA AUTOM LOOM WORKS LTD; DENSO CORP), 18. Januar 2000 (2000-01-18)

## Beschreibung

Die Erfindung betrifft eine Axialkolbenmaschine, insbesondere einen Klimakompressor für Kraftfahrzeuge, mit einem Triebwerk zum Ansaugen und Verdichten eines Druckmittels, wobei das Triebwerk durch eine Welle drehangetrieben wird und im Triebwerk die Drehbewegung in eine Hin- und Herbewegung der Kolben umgewandelt wird und wobei die Welle unter anderem mit einem Axiallager in einem Gehäuseteil der Axialkolbenmaschine gelagert ist.

Derartige Maschinen sind bekannt. Dabei werden die auftretenden axialen Kräfte über das Axiallager am Gehäuse abgestützt. Folglich werden Pulsationen und Schwingungen über diese Lagerstelle in das Gehäuse weitergeleitet und sind dann von außen zu hören.

Aus der Druckschrift JP 2000 018156 A ist eine Axialkolbenmaschine mit den Merkmalen des Oberbegriffs von Patentanspruch 1 bekannt, bei welcher zwischen einem Axiallager und einer Aufnahmefläche des Lagers in einem Gehäuseteil eine elastiche Vorrichtung als Dämpfungselement angeordnet ist.

Aus der Druckschrift EP 0 326 043 A offenbart sich eine Axialkolbenmaschine, bei welcher zwischen einem Axiallager und einer Aufnahmefläche des Lagers in einem Gehäuseteil eine Gummi-Vorrichtung als Dämpfungselement angeordnet ist.

Die Druckschrift DE 846 010 C beschreibt generell einen aus Metall und Gummi gebildeten Werkstoff, der neben der besonderen Wirkung des Gummis, wie beispielsweise Elastizität und Dämpfungsvermögen, gleichzeitig eine hohe Druckfestigkeit aufweist.

Die im Stand der Technik bekannten Maschinen haben allerdings Nachteile in Bezug auf die Lagerung derartiger Axiallager.

Es ist daher Aufgabe der Erfindung, eine Axialkolbenmaschine darzustellen, die diese Nachteile nicht aufweist.

Die Aufgabe wird gelöst durch eine Axialkolbenmaschine, bei welcher zwischen dem Axiallager und der Auflagefläche der Welle auf dem Axiallager eine Vorrichtung zur schwenkbaren und/oder wippbaren gelenkigen Lagerung zwischen Welle und Axiallager angeordnet ist. Bevorzugt wird weiterhin eine Axialkolbenmaschine, bei welcher die Vorrichtung eine erste Scheibe mit einem axial konisch hervorragenden Rand und eine zweite Scheibe, welche eine Lagerscheibe des Axiallagers darstellt, mit einer konisch abgeschrägten Fase am Außenumfang aufweist, wobei der axial konisch hervorragende Rand der ersten Scheibe auf der konisch abgeschrägten Fase der zweiten Scheibe dergestalt aufliegt, dass ein Kontakt zwischen der ersten und der zweiten Scheibe nur zwischen den beiden Konussen stattfindet und ansonsten zwischen der ersten und zweiten Scheibe ein axialer Zwischenraum ausgebildet ist. Das hat den Vorteil, dass der Konus in vereinfachter Form die Funktion einer Kugelabschnittsoberfläche wahrnimmt, ohne hohe Anforderungen an die Fertigungsgenauigkeit. Bei einer umlaufenden radialen Durchbiegung der Welle kann sich die erste Scheibe durch eine Kippbewegung gegen die zweite Scheibe winklig verlagern, und die Axialkräfte von der Welle auf das Lager können über die Kontaktflächen zwischen den Konussen (ggf. auch Kugelabschnitten oder balligen Flächen) trotz der Winkelstellung im Wesentlichen flächig (ringsum) übertragen werden. Gegenüber einem nicht schwenkbaren Axiallager, welches eine umlaufende Punktberührung haben würde, erhält man hier eine annähernd kreisringförmige Linienpressung, welche auch zu einer gleichmäßigeren Belastung des Dämpfungselementes beiträgt. Die Dauerhaltbarkeit dieser Art von Dämpfungsvorrichtung wird also durch diese flächige Kraftübertragung noch erhöht.

Bevorzugt wird weiterhin eine Axialkolbenmaschine, bei welcher der Konuswinkel im Bereich von 30 - 60 Grad, vorzugsweise 45 Grad angeordnet ist.

Weiterhin wird eine Axialkolbenmaschine bevorzugt, insbesondere Klimakompressor für Kraftfahrzeuge, mit einem Triebwerk zum Ansaugen und Verdichten eines Druckmittels, wobei das Triebwerk durch eine Welle drehangetrieben wird und im Triebwerk die Drehbewegung der Welle in eine Hin- und Herbewegung der Kolben umgewandelt wird und wobei die Welle unter anderem mit einem Axiallager in einem Gehäuseteil der Axialkolbenmaschine gelagert ist, wobei zwischen dem Axiallager und der Auflagefläche des Lagers im Gehäuse ein Gummi-Metallblech als Dämpfungselement angeordnet ist.

Die Verwendung eines Gummi-Metallblechs (ein Metallblech als Trägermaterial, von beiden Seiten mit einer Gummischicht überzogen) hat den Vorteil, einerseits sehr flach zu bauen und andererseits hohe Flächenpressungen dauerhaft auszuhalten. Ein reines Elastomerelement als Dämpfungselement widersteht nicht der Dauerbeanspruchung durch die ständig wechselnden umlaufenden axialen Kräfte. Die elastische Dämpfung des Gummi-Metallblechs verringert dabei das Außengeräusch des Kompressors beträchtlich.

Eine erfindungsgemäße Pumpe zeichnet sich dadurch aus, dass als Dämpfungselement eine elastomerbeschichtete Metallscheibe, insbesondere ein Gummi-Metallblech, verwendet wird. Das hat den Vorteil, dass das Dämpfungselement sehr flach baut und eine hohe Flächenpressung durch das Metall ermöglicht wird, da die Elastomerschicht unter Druck nicht wegfließen kann, wie bei einem reinen Elastomerelement. Damit ist eine hohe Lebensdauer des Dämpfungselementes erreichbar. Außerdem hat eine Gummi-Metallblechscheibe einen mehrfachen Dämpfungseffekt, da der Übergang von dem Metalllager auf die erste Gummischicht und von der ersten Gummischicht auf das Metallblech und von dem Metallblech auf die zweite Gummischicht und von der zweiten Gummischicht wiederum auf ein Lagerbauteil fünf Impedanzsprünge und damit eine entsprechende Schwingungsunterdrückung ermöglicht.

Daher wird vorzugsweise eine Axialkolbenmaschine bevorzugt, bei welcher das gummibeschichtete Metallblech vorzugsweise beidseitig beschichtet ist. Auch wird eine Axialkolbenmaschine bevorzugt, bei welcher mehrere Gummi-Metallblechscheiben übereinander in einer so genannten Sandwichbauweise angeordnet sind. Weiterhin wird eine Axialkolbenmaschine bevorzugt, bei welcher das oder die Gummi-Metallbleche unterschiedliche Gummischichtdicken oder Elastomerschichtdicken aufweisen. Das hat den Vorteil, dass durch unterschiedlich dicke Dämpfungselemente unterschiedliche Frequenzen abgedämpft werden können und so die Dämpfungselemente gezielt auf die störenden Frequenzen ausgerichtet werden können.

Die Erfindung wird nun anhand der Figuren beschrieben.
Figur 1 zeigt einen Teil einer Axialkolbenmaschine mit der entsprechenden Anordnung eines Axiallagers.
Figur 2 zeigt die Anordnung des Axiallagers mit einem erfindungsgemäßen Dämpfungselement.

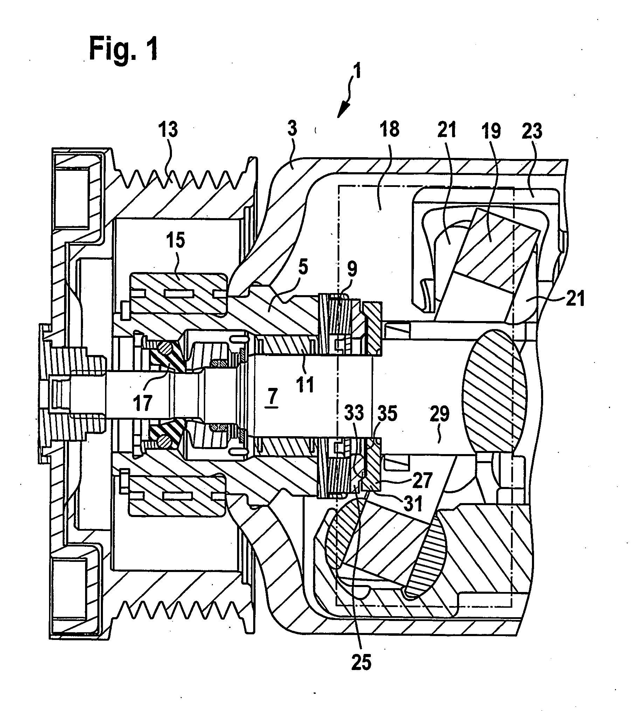

In Figur 1 ist ein Teil einer Axialkolbenmaschine 1 im Querschnitt dargestellt. Innerhalb eines Maschinengehäuses 3 ist in einer Lagerhülse 5, welche in dem Maschinengehäuse 3 angeordnet ist, eine Welle 7 mittels eines Axiallagers 9 und eines Radiallagers 11 gelagert. Die Welle 7 wird über eine Riemenscheibe 13 im Riementrieb eines Verbrennungsmotors angetrieben. Die Riemenscheibe 13 ist mittels eines separaten Wälzlagers 15 ebenfalls auf der Lagerhülse 5 gelagert. Durch eine Gleitringdichtung 17 ist der Innenraum der Axialkolbenmaschinen gegen die Atmosphäre abgedichtet. Im Triebraum 18 der Maschine wird durch die Welle 7 ein schwenkbarer Antriebsring 19 in eine Drehbewegung versetzt. Auf dem Schwenkring 19 gleiten wiederum Kolbenschuhe 21, die innerhalb hin- und hergehender Kolben 23 Taumelbewegungen durchführen und somit die Drehbewegung der Welle 7 in eine Hin- und Herbewegung der Kolben 23 umwandeln. Die Kolben 23 sind innerhalb eines hier nicht mehr dargestellten Zylinderblocks und innerhalb darin befindlicher Zylinderlaufbüchsen gelagert, saugen entsprechendes Kältemittel über Ventileinrichtungen an, verdichten dieses Kältemittel und stoßen es über entsprechende Ventileinrichtungen wieder aus. Für die Erfindung wichtig ist im Bereich des Axiallagers 9 eine erste Lagerscheibe 27 und eine zweite Lagerscheibe 25. Auf der Lagerscheibe 27 ist die Welle 7 mit einem Bund 29 axial gelagert. Die erste Scheibe 27 weist einen axial konisch hervorragenden Rand 31 auf, die zweite Scheibe 25 weist eine konisch abgeschrägte Fase 33 auf. Dabei liegt der konisch hervorragende Rand 31 der ersten Scheibe 27 derartig auf der konisch abgeschrägten Fase 33 der Scheibe 25 auf, dass ein Kontakt nur zwischen den beiden Konussen stattfindet und ansonsten zwischen der ersten und der zweiten Scheibe ein Zwischenraum 35 ausgebildet wird. Das hat den Vorteil, dass bei einer umlaufenden radialen Durchbiegung der Welle 7, welche durch die umlaufenden Kräfte des Axialkolbentriebwerks erzeugt wird, die erste Scheibe sich durch Kippbewegungen gegen die zweite Scheibe 25 auf dem Konus winklig verlagern kann und die Axialkräfte von der Welle 7 auf das Lager 9 über die Kontaktflächen zwischen den Konussen 31 und 33 trotz Winkelstellung flächig ringsum übertragen werden können. Die erste Scheibe 27 kann also gegenüber der zweiten Scheibe 25 eine Taumelbewegung vollführen.

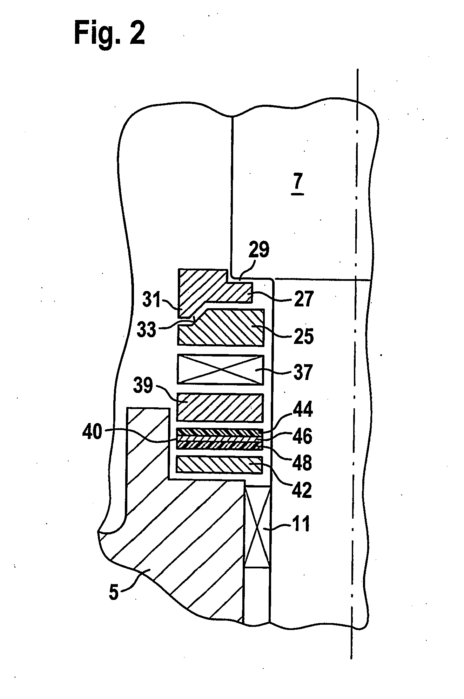

In Figur 2 ist in einer Teildarstellung noch einmal der Aufbau der Lagerung dargestellt, hier zusätzlich aber mit dem Dämpfungselement 40. Die erste Scheibe 27 mit dem konisch hervorragenden Rand 31 und die zweite Scheibe 25 mit der konischen Fase 33 sind oberhalb des Wälzkörpers 37 des Axiallagers 9 aus Figur 1 angeordnet. Der Wälzkörper 37 läuft weiterhin auf einer unteren Lagerscheibe 39. Eine Dämpfungseinrichtung in Form eines Gummi-Metallblechs 40 ist nun zwischen der unteren Lagerscheibe 39 und einer Stützscheibe 42 angeordnet. Das Dämpfungselement 40 ist hierbei aufgebaut aus einer Elastomer- oder Gummischicht 44, welche oben auf einem Metallblechträger 46 aufvulkanisiert ist, sowie einer zweiten Gummischicht 48, die auf der Unterseite des Blechträgerkörpers 46 aufvulkanisiert ist.

Somit müssen Axialkräfte und Axialschwingungen, die über den Wellenbund 29 in die Lagereinrichtung eingetragen werden, erstens die Elastomerschicht 44, zweitens die Metallblechschicht 46 und drittens die zweite Elastomerschicht 48 durchdringen, ehe sie über die Stützscheibe 42 in das Kompressorgehäuse bzw. die Lagerhülse 5 übertragen werden können. Die Erfindung besteht also darin, dass das Dämpfungselement 40 im Kraftfluß zwischen der Antriebswelle 7 und dem Gehäuse 3 bzw. der Lagerhülse 5 im Bereich der Axiallagerung 9 angeordnet wird. Auftretende Schwingungen werden zum einen rein durch die beiden Elastomer- oder Gummilagen 44 und 48 gedämpft. Der zweite Dämpfungseffekt besteht durch den hohen Impedanzsprung zwischen Gummi und Metall (es wird Energie verbraucht oder gebraucht, wenn eine Schwingung von einem Material in das andere übergeht). Hier hat das Gummimetallblech 40 den Vorteil, diesen Effekt mehrfach nutzen zu können, indem von der Metalllagerscheibe 39 zur Gummischicht 44 der erste Impedanzsprung und von der Gummischicht 44 zum Trägerblech 46 der zweite Impedanzsprung und vom Trägerblech 46 zur zweiten Gummischicht 48 der dritte Impedanzsprung und von der Gummischicht 48 in die Stützscheibe 42 der vierte Impedanzsprung auftritt.

Aufgrund der geringen Bautiefe dieser Dämpfungsscheiben 40 besteht auch die Möglichkeit einer Sandwichbauweise (Dämpfungsscheibe 40, Metallscheibe, wiederum Dämpfungsscheibe, ein weitere Metallscheibe, Axiallager usw.). Dadurch kann sich der Dämpfungseffekt nochmals erhöhen. Auch ist es möglich, die Gummischichten 44 und 48 in verschiedenen Stärken zu verwenden, um somit verschiedene Frequenzen zu dämpfen.

Die Dauerhaltbarkeit dieser Art der Dämpfung wird insbesondere dadurch erreicht, dass durch die gelenkige axiale Lagerung mittels der beiden Scheiben 27 und 25 die Axialkraft aus der Welle über eine kreisringförmige Kontaktfläche verteilt übertragen wird. Eine partielle Überlastung des Dämpfungselements 40, welche durch eine ungelenkige Lagerung auftreten würde, wird dadurch vermieden.

### Bezugszeichenliste

- 1: Axialkolbenmaschine
- 3: Maschinengehäuse
- 5: Lagerhülse
- 7: Welle
- 9: Axiallager
- 11: Radiallager
- 13: Riemenscheibe
- 15: Wälzlager für Riemenscheibe
- 17: Gleitringdichtung
- 18: Triebraum
- 19: schwenkbarer Antriebsring
- 21: Kolbenschuhe
- 23: Kolben
- 25: zweite Lagerscheibe
- 27: erste Lagerscheibe
- 29: axialer Wellenbund
- 31: axial konisch hervorragender Rand
- 33: konisch abgeschrägte Fase
- 35: Zwischenraum zwischen erster und zweiter Scheibe
- 37: Wälzkörper
- 39: untere Lagerscheibe
- 40: Gummi-Metallblech
- 42: Stützscheibe
- 44: Elastomerschicht
- 46: Blechträgerkörper
- 48: zweite Elastomerschicht

## Patentansprüche

1. Axialkolbenmaschine (1), insbesondere Klimakompressor für Kraftfahrzeuge, mit einem Triebwerk zum Ansaugen und Verdichten eines Druckmittels, wobei das Triebwerk durch eine Welle (7) drehangetrieben wird und im Triebwerk die Drehbewegung der Welle (7) in eine Hin- und Herbewegung der Kolben (23) umgewandelt wird und wobei die Welle (7) unter anderem mit einem Axiallager (9) in einem Gehäuseteil der Axialkolbenmaschine (1) gelagert ist, **dadurch gekennzeichnet, dass** zwischen dem Axiallager (9) und der Auflagefläche (29) der Welle (7) auf dem Axiallager (9) eine Vorrichtung zur schwenkbaren und/oder wippbaren gelenkigen Lagerung zwischen Welle (7) und Axiallager (9) angeordnet ist und
dass zwischen dem Axiallager (9) und der Aufnahmefläche des Lagers (9) im Gehäuseteil eine Gummi- oder Elastomer-Metallblechvorrichtung (40) als Dämpfungselement angeordnet ist.

2. Axialkolbenmaschine (1) nach Anspruch 1, **dadurch gekennzeichnet, dass** die Vorrichtung eine erste Scheibe (27) mit einem axial konisch hervorragenden Rand (31) und eine zweite Scheibe (25), welche eine Lagerscheibe des Axiallagers (9) darstellt, mit einer konisch abgeschrägten Fase (33) am Außenumfang aufweist, wobei der axial konisch hervorragende Rand (31) der ersten Scheibe (27) auf der konisch abgeschrägten Fase der zweiten Scheibe (25) dergestalt aufliegt, dass eine Kontakt zwischen der ersten und zweiten Scheibe nur zwischen den beiden Konussen stattfindet und ansonsten zwischen der ersten und zweiten Scheibe ein axialer Zwischenraum (35) ausgebildet ist.

3. Axialkolbenmaschine (1) nach einem der vorhergehenden Ansprüche, **dadurch gekennzeichnet, dass** als Dämpfungselement eine elastomerbeschichtete oder gummibeschichtete Metallscheibe (40), insbesondere ein Elastomer- oder Gummi-Metallblech, verwendet wird.

4. Axialkolbenmaschine (1) nach Anspruch 3, **dadurch gekennzeichnet, dass** der Blechträgerkörper (46) vorzugsweise beidseitig beschichtet ist.

5. Axialkolbenmaschine (1) nach Anspruch 3 oder Anspruch 4, **dadurch gekennzeichnet, dass** mehrere Elastomer- oder Gummi-Metallblechscheiben (40) in Art einer Sandwichbauweise übereinander angeordnet sind.

6. Axialkolbenmaschine (1) nach Anspruch 3, 4 oder 5, **dadurch gekennzeichnet, dass** das oder die Metallbleche (46) mit unterschiedlichen Gummischichtdicken (44, 48) oder Elastomerschichtdicken versehen sind.

## Claims

1. Axial piston machine (1), in particular an air conditioning compressor for motor vehicles, having a driving mechanism for drawing in and compressing a pressure medium, the driving mechanism being rotary-driven by a shaft (7) and the rotary motion of the shaft (7) being converted in the driving mechanism into a back-and-forth motion of the pistons and the shaft (7) being supported in part by a thrust bearing (9) in a housing part of the axial piston machine (1), **characterized in that** between the thrust bearing (9) and the receiving surface (29) of the shaft (7) on the thrust bearing (9) a device for rotatable and/or rockable articulated mounting is situated between shaft (7) and thrust bearing (9), and **in that** a rubber- or elastomer-sheet metal device (40) is situated as a damping element between the thrust bearing (9) and the receiving surface of the bearing (9) in the housing part.

2. The axial piston machine (1) according to Claim 1, **characterized in that** the device has a first plate (27) with an axially conically projecting rim (31) and a second plate (25) which represents a bearing disk of the thrust bearing (9), having a conically beveled chamfer (33) on its outer circumference, the axially conically projecting rim (31) of the first plate (27) lying on the conically beveled chamfer of the second plate (25) in such a way that a contact between the first and second plates takes place only between the two cones, and otherwise an axial intermediate space (35) is formed between the first and second plates.

3. The axial piston machine (1) according to one of the preceding claims, **characterized in that** an elastomer-coated or rubber-coated metal plate (40), in particular an elastomer- or rubber-sheet metal plate, is used as a damping element.

4. The axial piston machine (1) according to Claim 3, **characterized in that** the plate support body (46) is preferably coated on both sides.

5. The axial piston machine (1) according to Claim 3 or Claim 4, **characterized in that** a plurality of elastomer- or rubber-sheet metal plates (40) are situated one above the other in the nature of a sandwich construction.

6. The axial piston machine (1) according to Claim 3, 4 or 5, **characterized in that** the sheet metal plate or plates (46) are provided with rubber coatings (44, 48) or elastomer coatings of different thicknesses.

## Revendications

1. Machine à pistons axiaux (1), notamment un compresseur de climatisation pour automobiles, avec un mécanisme pour aspirer et compresser un moyen de pression, le mécanisme étant entraîné en rotation par un arbre (7) et, dans le mécanisme, le mouvement rotatif de l'arbre (7) étant transformé en mouvement de va-et-vient du piston (23) et l'arbre (7) étant logé entre autre avec un palier axial (9) dans une pièce de carrosserie de la machine à pistons axiaux (1), **caractérisé en ce qu'**entre le palier axial (9) et la surface de réception (29) de l'arbre (7), un mécanisme est disposé sur le palier axial (9) pour un logement flexible, oscillant et/ou basculant, entre l'arbre (7) et le logement axial (9) et un dispositif de tôle métallique à caoutchouc ou à élastomère (40) étant disposé comme élément d'amortissement entre le palier axial (9) et la surface de réception du palier (9) dans une pièce de carrosserie.

2. Machine à pistons axiaux (1) selon la revendication 1, **caractérisée en ce que** le mécanisme présente un premier disque (27) avec un bord (31) faisant saillie axialement comme un cône et un second disque (25), qui représente un disque de palier du palier axial (9), avec un profil chanfreiné conique (33) sur la circonférence extérieure, le bord (31) faisant saillie axialement, comme un cône, du premier disque (27) s'appuyant sur le profil chanfreiné conique du second disque (25) de telle sorte qu'aucun contact entre le premier et le second disque n'a lieu si ce n'est entre les deux cônes, un espace intermédiaire axial (35) se formant par ailleurs entre le premier et le second disques.

3. Machine à pistons axiaux (1) selon l'une quelconque des revendications précédentes, **caractérisée en ce que** l'élément d'amortissement utilisé est un disque métallique (40) couvert d'une couche d'élastomère ou d'une couche de caoutchouc, notamment une tôle métallique à élastomère ou à caoutchouc.

4. Machine à pistons axiaux (1) selon la revendication 3, **caractérisée en ce que** le corps de poutre en tôles (46) est de préférence couvert d'une couche des deux côtés.

5. Machine à pistons axiaux (1) selon la revendication 3 ou 4, **caractérisée en ce que** plusieurs disques métalliques (40) à élastomère ou à caoutchouc sont disposés l'un sur l'autre à la manière d'une structure en sandwich.

6. Machine à pistons axiaux (1) selon la revendication 3, 4 ou 5, **caractérisée en ce que** la ou les tôle(s) métallique(s) (46) est/sont prévue(s) avec des épaisseurs de couche de caoutchouc (44, 48) ou des épaisseurs de couche d'élastomère différentes.
